# EUROPÄISCHE PATENTANMELDUNG

(11) **EP 4 803 572 A1**
(43) Veröffentlichungstag der Anmeldung: **09.09.2026**
(21) Anmeldenummer: 26162632.9
(22) Anmeldetag: 05.03.2026
(51) Int. Cl.: C08K 5/5313, C08K 7/14, C08L 77/02

(54) **FLAMMGESCHÜTZTE KUNSTSTOFFPRODUKTE**

(30) Priorität: 06.03.2025 EP 25161997
(71) Anmelder: LANXESS Deutschland GmbH, 50569 Köln (DE)
(72) Erfinder: MAY, Lars, 40764 Langenfeld (DE); WAMBACH, Wolfgang, 51065 Köln (DE)

(57) **Zusammenfassung**

Die vorliegende Erfindung betrifft flammgeschützte Kunststoffprodukte aus Polyamid basierten Formmassen enthaltend als Flammschutzmittel wenigstens ein Phosphinsäuresalz und/oder wenigstens ein Diphosphinsäuresalz, wenigstens einen Flammschutzmittel-Synergist und wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, die zur Herstellung dieser Kunststoffprodukte erforderlichen Formmassen, sowie die Verwendung des erfindungsgemäß einzusetzenden Farbmittels zur Herstellung flammgeschützter Polyamid basierter Formmassen bzw. Kunststoffprodukte mit hoher Lasertransparenz.

## Beschreibung

Die vorliegende Erfindung betrifft flammgeschützte Kunststoffprodukte aus Polyamid basierten Formmassen enthaltend als Flammschutzmittel wenigstens ein Phosphinsäuresalz und/oder wenigstens ein Diphosphinsäuresalz, wenigstens einen Flammschutzmittel-Synergist und wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, die zur Herstellung dieser Kunststoffprodukte erforderlichen Formmassen, sowie die Verwendung des erfindungsgemäß einzusetzenden Farbmittels zur Herstellung flammgeschützter Polyamid basierter Formmassen bzw. Kunststoffprodukte mit hoher Lasertransparenz.

### Stand der Technik

Polyamide sind aufgrund ihrer guten mechanischen Stabilität, ihrer chemischen Beständigkeit und der guten Verarbeitbarkeit ein wichtiger Werkstoff zum Beispiel für den Einsatz in Kraftfahrzeugen, in Bauteilen für die Elektro- und Elektronikindustrie oder in Haushaltsgeräten. Bei Anwendungen der Polyamide in der Nähe von stromführenden Teilen werden dabei häufig flammwidrig ausgestattete Materialien eingesetzt, um so der Gefahr einer Brandentstehung, ausgelöst durch überhitzte Drähte oder Kontakte, entgegenzuwirken. Je nach Anwendungsgebiet sind dabei nicht nur eine gute Selbstverlöschungseigenschaft, insbesondere eine UL94 V-0 Klassifizierung gemäß Underwriters Laboratories Inc. Standard of Safety, "Test for Flammability of Plastic Materials for Parts in Devices and Appliances", S. 14 - 18 Northbrook 1998**,** sondern auch eine geringe Entzündbarkeit erwünscht.

Dabei werden im Bereich der Polyamide in jüngster Zeit zunehmend halogenfreie Lösungen eingefordert, was neben ökologischen Gründen auch daran liegt, dass halogenfrei flammgeschützte Polyamide gegenüber halogenhaltigen Systemen in der Regel nicht nur die Entflammbarkeit von Gegenständen verringern und dadurch die Entstehung von Bränden verzögern, sondern zudem die Rauchentwicklung reduzieren, toxische Gase verhindern und gleichzeitig umwelt- und gesundheitsverträglich sind.

Der Wunsch nach maximaler Designfreiheit und damit höherer Komplexität der Bauteilgeometrie verlangt in Verbindung mit der kostengetriebenen Notwendigkeit nach automatisierbaren und gut integrierbaren Serienfertigungsprozessen zunehmend nach Werkstoffen, die sich zudem nach dem Verfahren des Laserdurchstrahlschweißens miteinander fügen lassen; siehe: E. Haberstroh, W.-M. Hoffmann, Laserdurchstrahlschweißen von Kunststoffen - Elastomere und Kunststoffe, KGK-Rubberpoint, 11.2006, S. 590 - 595**.** Für einen lasertransparenten Fügepartner erfordert dies einen hohen Transmissionsgrad bei der anzuwendenden Laserwellenlänge. Letzteres ist bei flammgeschützten Polyamiden eine große Herausforderung, da Flammschutzmittel das Laserlicht streuen oder sogar absorbieren, wie dies beispielsweise bei dem als Flammschutzmittel-Synergist in halogenhaltigen Flammschutzmitteln gebräuchlichen Antimontrioxid der Fall ist. Eine zusätzliche Herausforderung ist bei farbigen Polyamiden dann noch das eingesetzte Farbmittel.

WO 2009/066232 A1 beschreibt NIR-absorbierende Formmassen, die in Laserschweißprozessen eingesetzt werden können. Verschiedene Pigmente werden zur Reduktion der NIR-Transmission bei Kunststoffen, u.a. Polyamiden, eingesetzt, u.a. auch Ti0₂ Pigmente mit mittleren Partikelgrößen von 30 nm bis 4,35 µm. Lasertransparente Formmassen werden in WO 2009/066232 A1 nicht speziell beschrieben.

Hohe Verarbeitungstemperaturen von teilweise >300°C, insbesondere in der Compoundierung und im Spritzguss, aber auch die Gegenwart von Additiven, insbesondere von Flammschutzmitteln, schränken die Auswahl geeigneter Farbmittel in Polyamiden, insbesondere zur orangen Kennzeichnung wesentlicher Bauteile für den Elektroantrieb, erheblich ein. Die Farbe Orange zur Kennzeichnung von elektrischer Ausrüstung von Maschinen ist in **VDE 0113-1** "Sicherheit von Maschinen - Elektrische Ausrüstung von Maschinen - Teil 1: Allgemeine Anforderungen", Abschn. 13.2.4 geregelt, wobei Orange nur für "ausgenommene Stromkreise" nach Abschn. 5.3.5 verwendet werden soll. Die Norm **CEI EN 60204-1:2006** (CEI 44-5 "Sicherheit von Maschinen - Elektrische Ausrüstung von Maschinen") legt fest, dass Orange für Stromkreise, deren Versorgung nicht durch eine Trennvorrichtung unterbrochen werden kann, verwendet wird. Orange hat sich deshalb zur Kennzeichnung wesentlicher Bauteile für den Elektroantrieb durchgesetzt.

Zu berücksichtigen ist zudem, dass Farbstoffe in Polyamiden unter Extremanforderungen, wie sie insbesondere bei der Verarbeitung von Polyamiden auftreten, zu Farbschlieren, insbesondere auf den Oberflächen spritzgegossener Erzeugnisse nahe der Einspritzpunkte, oder zu Verfärbungen neigen.

Bekannt ist dem Fachmann beim Einsatz organischer, im Polymer löslicher Farbstoffe, beispielsweise aus EP 0 035 672 B1 im Falle von Isoindolinfarbstoffen, das Phänomen des Verbräunens, was auf thermische Schädigung des Farbstoffs zurückzuführen ist.

Unerwünschte Farbschlieren treten hingegen auf, wenn das Farbmittel ungenügend eingemischt wurde, wenn Farbmittel und zu verarbeitender Kunststoff miteinander unverträglich sind, oder es zu einer Entmischung aufgrund zu hoher Scherung während des Spritzgießens kommt. Fehlerquellen für das Auftreten solch unerwünschter Farbschlieren gibt es zahlreiche. Genannt seien hier beispielsweise maschinenbedingte Fehlerquellen an der Mischschnecke, zu kleiner Mischzylinder, defekte Farbdosierung, zu großer Materialtrichter oder eine elektrostatische Aufladung der Farbe bzw. des Farbmittels. Materialbedingte Fehlerquellen können die Unverträglichkeit von Masterbatch oder Farbmittel mit dem zu verarbeitenden Kunststoff, ungenügende Löslichkeit des Farbmittels im zu verarbeitenden Kunststoff, thermische Empfindlichkeit des Farbmittels, zu große Granulate oder zu hoher Pigmentanteil sein. Methodisch bedingte Fehlerquellen können zu niedriger Staudruck während des Spritzgießens, zu hohe Schneckendrehzahl, zu hohe oder zu niedrige Massetemperatur, zu hohe oder zu niedrige Einspritzgeschwindigkeit, zu hohe oder zu niedrige Werkzeugtemperatur, oder unzureichende bzw. zu hohe Farbdosierung sein. Schließlich können auch Werkzeug bedingte Fehlerquellen das Auftreten von Farbschlieren begünstigen wie zu kleine Fließquerschnitte, zu lange Fließwege, ungünstige Lage von Bindenähten oder für den Spritzguss zu kleine Abschnitte am Spritzgusserzeugnis. Insbesondere im Falle glasfaserverstärkter Kunststoffprodukte ist deshalb die in Bezug auf ein gleichzeitig anwesendes Farbmittel schlierenreduzierte oder sogar die schlierenfreie Verarbeitung Polyamid basierter Polymerzusammensetzungen, insbesondere im Spritzguss, für den Fachmann eine besondere Herausforderung.

WO 2020/187702 A1 offenbart Hochvoltkomponenten basierend auf Polymerzusammensetzungen enthaltend wenigstens ein Polyamid und 10,10'-Oxy-bis-12H-phthaloperin-12-on.

DE 20 2024 001708 U betrifft Elektromobilitätskomponenten mit einem Farbabstand ΔE <20 von den L*a*b* Koordinaten zu einer mit "2" beginnenden Farbnummer der RAL-Farbtabelle enthaltend Polymerzusammensetzungen auf Basis wenigstens eines Polyamids und eines Farbmittels mit einer nach ISO 13320 mittels Laserdiffraktometrie zu bestimmenden mittleren Teilchengröße d50 im Bereich von 1 bis 12 µm enthaltend 9,9'-Oxybis-12H-phthaloperin-12-on, 9,10-Oxybis-12H-phthaloperin-12-on und 10,10'-Oxybis-12H-phthaloperin-12-on im Verhältnis von 1 : 1 : 0,8 - 1,5 bis 1 : 1,5 : 0,8 - 1,5, wobei in den Polymerzusammensetzungen auf 100 Massenanteile wenigstens eines Polyamids 0,01 bis 5 Massenanteile Farbmittel vorliegen.

Ausgehend vom Stand der Technik bestand die Aufgabe der vorliegenden Erfindung deshalb darin, halogenfrei flammgeschützte, Kunststoffprodukte aus Polyamid basierten Polymerzusammensetzungen bereitzustellen, die einerseits durch das einzusetzende im Polyamid lösliche Farbmittel die Herstellung schlierenfreier, oranger Kunststoffprodukte ohne Verbräunung ermöglicht, gleichzeitig aber auch eine hinreichende Lasertransparenz aufweisen, um auch in nachgelagerten Laser basierten Verarbeitungsverfahren verarbeitet werden zu können, ohne Verschlechterung gegenüber den UL 94 Resultaten einer nicht orange eingefärbten Probe bei ansonsten derselben Zusammensetzung.

Überraschend wurde nun gefunden, dass Kunststoffprodukte aus Polymerzusammensetzungen enthaltend wenigstens ein Polyamid, wenigstens ein Flammschutzmittel aus wenigstens einem Phosphinsäuresalz und/oder wenigstens einem Diphosphinsäuresalz und/oder deren Polymere, wenigstens einen Flammschutzmittel-Synergist und wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on die geforderten Anforderungen erfüllen.

### Erfindungsgegenstand

Gegenstand der Erfindung sind Kunststoffprodukte aus Polymerzusammensetzungen enthaltend
a) wenigstens ein Polyamid,
b) wenigstens ein Flammschutzmittel aus wenigstens einem Phosphinsäuresalz der Formel (I) und/oder wenigstens einem Diphosphinsäuresalz der Formel (II) und/oder deren Polymere, 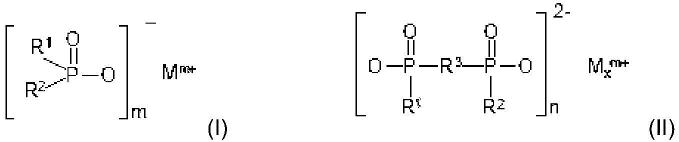 worin
   R¹, R² gleich oder verschieden sind und für ein lineares oder verzweigtes C₁-C₆-Alkyl, und/oder für C₆-C₁₄-Aryl stehen,
   R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
      - M: für Aluminium oder Zink steht,
      - m: für eine ganze Zahl von 1 bis 4 steht;
      - n: für eine ganze Zahl von 1 bis 3 steht,
      - x: für 1 und 2 steht,
   wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on.

Vorzugsweise betrifft die Erfindung Kunststoffprodukte aus Polymerzusammensetzungen enthaltend
a) wenigstens ein Polyamid, vorzugsweise Polyamid 6 oder Polyamid 66,
b) wenigstens ein Flammschutzmittel aus wenigstens einem Phosphinsäuresalz der Formel (I) 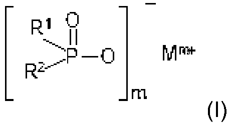 worin
   R¹, R² gleich oder verschieden sind und für ein lineares oder verzweigtes C₁-C₆-Alkyl stehen,
   - M: für Aluminium oder Zink steht, insbesondere für Aluminium,
   - m: für eine ganze Zahl von 1 bis 4 steht;
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on.

Vorzugsweise betrifft die Erfindung Kunststoffprodukte mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** enthaltend a) wenigstens ein Polyamid und die oben genannten Komponenten b) das wenigstens eine Flammschutzmittel, c) den wenigstens einen Flammschutzmittel-Synergist und d) das wenigstens eine Farbmittel.

Besonders bevorzugt betrifft die Erfindung Kunststoffprodukte sowie die zu ihrer Herstellung erforderlichen Polymerzusammensetzungen mit einem nach **DIN 5033 (1979)** zu bestimmenden Farbabstand ΔE <10 von den L*a*b* Koordinaten zu einer mit "2" beginnenden Farbnummer der RAL-Farbtabelle gemäß Farbmodell nach **EN ISO 11664-4** enthaltend a) wenigstens ein Polyamid und die oben genannten Komponenten b) das wenigstens eine Flammschutzmittel, c) den wenigstens einen Flammschutzmittel-Synergist und d) das wenigstens eine Farbmittel.

Ganz besonders bevorzugt betrifft die Erfindung Kunststoffprodukte mit einem nach **DIN 5033 (1979)** zu bestimmenden Farbabstand ΔE <5 von den L*a*b* Koordinaten zu einer mit "2" beginnenden Farbnummer der RAL-Farbtabelle gemäß Farbmodell nach **EN ISO 11664-4** enthaltend a) wenigstens ein Polyamid und die oben genannten Komponenten b) das wenigstens eine Flammschutzmittel, c) den wenigstens einen Flammschutzmittel-Synergist und d) das wenigstens eine Farbmittel.

Bevorzugt sind solche Kunststoffprodukte, worin auf 100 Massenanteile a) des wenigstens einen Polyamids
2 bis 100 Massenanteile, bevorzugt 5 bis 60 Massenanteile, besonders bevorzugt 7 bis 40 Massenanteile, insbesondere bevorzugt 8 bis 30 Massenanteile b) des wenigstens einen Flammschutzmittels,
0,2 bis 50 Massenanteile, bevorzugt 0,5 bis 40 Massenanteile, besonders bevorzugt 0,75 bis 35 Massenanteile c) des wenigstens einen Flammschutzmittel-Synergist
und 0,01 bis 5 Massenanteile des d) wenigstens eines Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on eingesetzt werden.

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies betrifft insbesondere die obigen Kombinationen der Mengenangaben zu den einzelnen Komponenten in Bezug auf die erfindungsgemäßen Polymerzusammensetzungen und die daraus herzustellenden Kunststoffprodukte, wie auch im Rahmen der vorliegenden Erfindung beanspruchte Verfahren und Verwendungen. Im Rahmen dieser Anmeldung genannte Normen beziehen sich auf die zum Anmeldetag dieser Erfindung geltende Fassung. Sofern nicht anders angegeben handelt es sich bei Prozentangaben um Gewichtsprozente.

### Laserdurchstrahlschweißen

Voraussetzung für die Anwendung des Laserdurchstrahlschweißens als Methode zum Verbinden zweier Kunststoffformteile ist, dass die vom Laser emittierte Strahlung zunächst ein Formteil durchdringt, das für Laserlicht der eingesetzten NIR-Wellenlange ausreichend transparent ist (auch als NIR-transparentes Formteil bezeichnet). Vorzugsweise liegt hierfür die Wellenlänge im Bereich von 800 nm bis 1200 nm. Eine ausreichende Transparenz ist dann gegeben, wenn das erste Formteil zumindest teilweise für NIR-Strahlung durchlässig ist. Dies bewirkt, dass die NIR-Strahlung in ausreichendem Maße auf das zweite Formteil trifft, um eine feste Verbindung der beiden Formteile durch Laserschweißen zu ermöglichen. Vorzugsweise weist das erste Formteil zumindest teilweise eine Transmission für NIR-Strahlung von mindestens 10% auf. Hierbei bedeutet "zumindest teilweise" dass diese angegebene Transmission von mindestens 10% zumindest in dem Bereich, der dem Schweißbereich entspricht, erfüllt wird. Außerhalb dieses Schweißbereiches ist die angegebene Transmission von mindestens 10% nicht erforderlich. Vorzugsweise weist jedoch das gesamte von Laserstrahlung zu durchdringende Formteil eine Transmission von mindestens 10% auf. Die NIR-Strahlung, welche das erste Formteil durchdringt, trifft schließlich auf den Schweißbereich, wo diese in einer dünnen Schicht des zweiten Formteils absorbiert wird, wobei das NIR-absorbierende Formteil das NIR-transparente Formteil kontaktiert. In der dünnen Schicht des zweiten Formteils, die das NIR-Laserlicht absorbiert, wird die Laserenergie in Wärme umgewandelt, die zum Aufschmelzen im Schweißbereich und letztlich in der Verbindung des NIR-transparenten Formteils mit dem NIR-absorbierenden Formteil resultiert. Für das Laserdurchstrahlschweißen werden üblicherweise Laser im Wellenlängenbereich von 800 nm bis 1200 nm eingesetzt. Im Bereich der Wellenlänge der für das Thermoplastschweißen eingesetzten Laser sind Nd:YAG-Laser (1064 nm) oder Hochleistungsdiodenlaser (800- 1000 nm) üblich. Dem Fachmann stehen mehrere Laserschweißverfahrensvarianten zur Verfügung, die alle auf dem Durchstrahlprinzip beruhen. So stellt das Konturschweißen einen sequenziellen Schweißprozess dar, bei dem entweder der Laserstrahl entlang einer frei programmierbaren Nahtkontur geführt, oder das Bauteil relativ zum fest installierten Laser bewegt wird. Beim Simultanschweißen wird die linienförmig emittierte Strahlung einzelner Hochleistungsdioden entlang der zu schweißenden Nahtkontur angeordnet. Das Aufschmelzen und Verschweißen der gesamten Kontur erfolgt somit zeitgleich. Das QuasiSimultanschweißen stellt eine Kombination aus dem Kontur- und dem Simultanschweißen dar. Der Laserstrahl wird mit Hilfe von galvanometrischen Spiegeln (Scannern) mit einer sehr hohen Geschwindigkeit von 10 m/s und mehr entlang der Schweißnahtkontur geführt. Durch die hohe Geschwindigkeit wird der Fügebereich nach und nach erwärmt und aufgeschmolzen. Gegenüber dem Simultanschweißen besteht eine hohe Flexibilität bei Veränderungen der Schweißnahtkontur. Das Maskenschweißen ist ein Verfahren, bei dem ein linienförmiger Laserstrahl quer über die zu fügenden Teile bewegt wird. Durch eine Maske wird die Strahlung gezielt abgeschattet und trifft nur dort, wo geschweißt werden soll, auf die Fügefläche. Das Verfahren erlaubt die Herstellung sehr exakt positionierter Schweißnähte. Diese Verfahren sind dem Fachmann beispielsweise aus dem Handbuch Kunststoff-Verbindungstechnik" (G. W. Ehrenstein, Hanser, ISBN 3-446-22668-0**) und / oder DVS-Richtlinie 2243 "Laserstrahlschweißen thermoplastischer Kunststoffe"** bekannt.

Erfindungsgemäß bevorzugte Varianten des Laserdurchstrahlschweißens sind deshalb das Konturschweißen, das Simultanschweißen, das Quasisimultanschweißen, der TWIST^{®}-Ansatz, das Maskenschweißen, das Radialschweißen, das Globo-Schweißen und das Hybridschweißen.

Auch wenn die NIR-Transparenzen der verschiedenen thermoplastischen Kunststoffe unterschiedlich ausfallen können, so besitzen die gängigen thermoplastischen Kunststoffe im NIR-Bereich doch eine ausreichend hohe Transparenz, so dass Laserschweißprozesse durchführbar sind, wenn geeignete Prozessparameter gewählt werden (Dicke des NIR-transparenten Fügepartners, Intensität des Laserstrahls, Geschwindigkeit des Schweißprozesses, Auswahl geeigneter Additive im thermoplastischen Kunststoff). Aufgrund der geringen NIR-Absorption von Thermoplasten wird der das Laserlicht absorbierende Fügepartner üblicherweise mit einem NIR-absorbierenden Zuschlagstoff ausgerüstet. Dafür eignen sich insbesondere Pigmente, die im Wellenlangenbereich des Schweißlasers eine möglichst hohe Absorption aufweisen. Besonders geeignet und weit verbreitet ist die Nutzung von Rußen jeglicher Art als NIR-absorbierende Pigmente. Daher sind die NIR-absorbierenden Fügepartner zumeist dunkel bis schwarz gefärbt. Sofern der NIR-transparente Fügepartner eine ähnliche Farbe wie der NIR-absorbierende aufweisen soll, ist zu beachten, dass die Einfärbung des NIR-transparenten Fügepartners vor allem in dem für das menschliche Auge wahrnehmbaren Wellenlangenbereich erfolgt (ca. 380 bis 750 nm) und eine möglichst geringe Beeinträchtigung der NIR-Transmission stattfindet. Zum Einfärben von Kunststoffen stehen grundsätzlich zwei Arten von Farbmitteln zur Verfügung: Pigmente und lösliche Farbstoffe (teilweise auch vereinfachend "Farbstoffe" genannt). Die Streuung von NIR-Licht an Farbmitteln lasst sich weitgehend vermeiden, wenn lösliche Farbstoffe eingesetzt werden, da sie sich bis hin zu molekulardispers im Thermoplast verteilen lassen und damit keine Streuquelle für NIR-Licht darstellen. Weiterhin soll die NIR-Absorption der löslichen Farbstoffe möglichst gering sein.

Das im Rahmen der vorliegenden Erfindung zur orangen Kennzeichnung von Polyamid basierten Kunststoffprodukten einzusetzende wenigstens eine im Polymer lösliche Farbmittel, das zudem das Erfordernis der Lasertransparenz bzw. die geringe Beeinträchtigung der NIR-Transmission erfüllt, ist das Isomerengemisch in Form von 9,9'-Oxybis-12H-phthaloperin-12-on, 9,10-Oxybis-12H-phthaloperin-12-on und 10,10'-Oxybis-12H-phthaloperin-12-on.

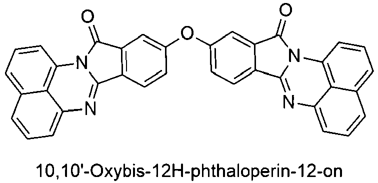

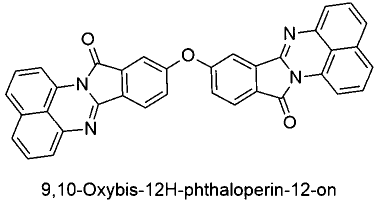

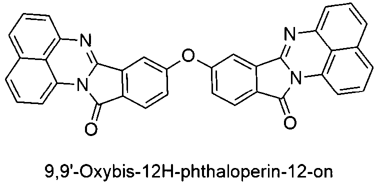

Das erfindungsgemäß einzusetzende Farbmittel ist vorzugsweise erhältlich nach dem Verfahren gemäß Synthesevorschrift 2 in DE 20 2024 001 708 U1 mit einem Isomerenverhältnis von 9,9'-Oxybis-12H-phthaloperin-12-on, 9,10-Oxybis-12H-phthaloperin-12-on und 10,10'-Oxybis-12H-phthaloperin-12-on im Bereich von 1: 1: 0,8 - 1,5 bis 1: 1,5 : 0,8 - 1,5. Vorzugsweise weist das erfindungsgemäß einzusetzende Farbmittel eine nach **ISO 13320** mittels Laserdiffraktometrie zu bestimmende mittlere Teilchengröße d50 im Bereich von 1 bis 20 µm auf, besonders bevorzugt eine mittlere Teilchengröße d50 im Bereich von 1 bis 10 µm.

Die im Rahmen der vorliegenden Erfindung aus den Experimenten erlangte Erkenntnis, dass das erfindungsgemäß einzusetzende Farbmittel in Polyamiden eine hohe NIR-Transmission zeigt, gleichzeitig weder mit dem als Komponente b) einzusetzenden Flammschutzmittel, noch mit dem Flammschutzmittel-Synergist c) interagiert und zudem hohe Verarbeitungstemperaturen übersteht und damit keine Verbräunung zeigt, ermöglicht den Einsatz erfindungsgemäßer, flammgeschützter, oranger Polymerzusammensetzungen und daraus herzustellender Kunststoffprodukte, vorzugsweise in Anwendungen bei denen Lasertransparenz gefordert ist. Die Erfindung betrifft deshalb vorzugsweise Polymerzusammensetzungen und Kunststoffprodukte wobei es sich um lasertransparente, orange, flammgeschützte Erzeugnisse oder Fügepartner handelt, insbesondere solche zum Einsatz in der Elektromobilität.

Das erfindungsgemäß einzusetzende Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on kann direkt als Pulver, oder aber in Form eines Masterbatches, in Form eines Kompaktes oder in Form eines Konzentrates eingesetzt werden, wobei Masterbatche bevorzugt sind und Masterbatche in einer Polyamidmatrix besonders bevorzugt sind.

### Lasertransparenz

Die im Rahmen der vorliegenden Erfindung an Probekörpern zu bestimmende Lasertransparenz orientiert sich an der Tatsache, dass sich auftreffende Strahlung je nach Absorptionsvermögen und Dicke des zu untersuchenden Kunststoffteils in zwei Teile aufteilt, die messtechnisch erfasst werden können.

Unter einer hohen Lasertransmission gilt erfindungsgemäß eine Lasertransmission von mindestens 30%, bevorzugt mindestens 40%, besonders bevorzugt mindestens 50% gemessen an Probeplättchen einer Dicke von 0,75 mm mit dem Transmissionsmessgerat LPKF TMG3 der Firma LPKF Laser 8 Electronics AG, Garbsen, Deutschland bei einer Laserwellenlange von 980 nm. Das Transmissionsmessgerat LPKF TMG3 ist ein zertifiziertes, rückführbar kalibriertes Messinstrument. Seine Messmittelfähigkeit wurde im Rahmen einer statistischen Messsystemanalyse (MSA) nachgewiesen. Das Gerät entspricht zudem den Vorgaben der Automotive-Norm IATF 16949 und ist damit direkt zur normkonformen Qualitätssicherung qualifiziert. Vorzugsweise werden im Rahmen der vorliegenden Erfindung Nd:YAG-Laser (1064 nm) oder Hochleistungsdiodenlaser (800 - 1000 nm) angewandt. Die Messungen im Rahmen der vorliegenden Erfindung erfolgen auf Basis der DVS-Richtlinie 2243 (01/2014) "Laserstrahlschweißen thermoplastischer Kunststoffe" anhand von Rundplatten mit 80 mm Durchmesser und 0,75 mm Dicke im nahen Infrarot (NIR). Das Transmissionsmessgerat LPKF TMG3 der Firma LPKF Laser & Electronics AG wird vor den Messungen mit einem nach **DIN EN ISO/IEC 17025** erzeugten Messnormal kalibriert. Die Messungen erfolgen im Rahmen der vorliegenden Erfindung bei einer Laserwellenlänge von 980 nm.

Eine Reduzierung der Transmission von <3% bei 980 nm im Vergleich zu einer Kunststoffprobe ohne Komponente d) dem Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on wird im Rahmen der vorliegenden Erfindung mit +++ bewertet. Eine Reduzierung der Transmission bei 980 nm im Bereich von 3 bis 5% im Vergleich zu einer Kunststoffprobe ohne Komponente d) dem Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on wird im Rahmen der vorliegenden Erfindung mit ++ bewertet. Eine Reduzierung der Transmission bei 980 nm im Bereich von 5 bis 10% im Vergleich zu einer Kunststoffprobe ohne Komponente d) dem Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on wird im Rahmen der vorliegenden Erfindung nur noch mit + bewertet.

### Compoundierung

Die Zubereitung von Polymerzusammensetzungen zur Herstellung erfindungsgemäßer flammgeschützter Kunststoffprodukte erfolgt mittels Compoundierung und anschließender Verarbeitung im Spritzguss, in der Extrusion, oder durch Blasformen indem das als Edukt einzusetzende wenigstens eine Polyamid mit dem b) wenigstens einen Flammschutzmittel, dem c) wenigstens einen Flammschutzmittel-Synergist und dem d) wenigstens einen Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on in wenigstens einem Mischwerkzeug im oben angegebenen Verhältnis gemischt wird. Hierdurch werden Polymerzusammensetzungen in Form von Formmassen erhalten, die entweder ausschließlich aus den genannten Komponenten bestehen, oder aber zusätzlich zu diesen Komponenten noch wenigstens eine weitere Komponente enthalten. Bei den erfindungsgemäßen flammgeschützten Kunststoffprodukten handelt es sich demnach vorzugsweise um Spritzguss-, Extrusions-, oder Blasformerzeugnisse, insbesondere um Spritzgusserzeugnisse.

Die Verarbeitung von Polyamiden in den genannten Verfahren erreicht Temperaturen bis in den Bereich der Schmelzpunkte von Polyamiden. Die Schmelzpunkte technisch bedeutender und daher erfindungsgemäß bevorzugter Polyamide liegen im Bereich von 178°C für Polyamid 12, über 220°C für Polyamid 6 bis 260°C für Polyamid 66.

Polyamide sind hygroskopisch, d.h. sie nehmen Feuchtigkeit aus der Luft auf. Vorzugsweise werden einzusetzende Polyamide, insbesondere in Form von Granulat einzusetzende Polyamide, vor dem Spritzgießen getrocknet. Die Trocknung reduziert oder verhindert im günstigsten Fall Lufteinschlüsse, Blasenbildung und Maßungenauigkeiten.

Das getrocknete Polyamid wird in der Spritzgießmaschine aufgeschmolzen. Die Verarbeitungstemperaturen liegen vorzugsweise im Bereich von 230°C bis 310°C, besonders bevorzugt im Bereich von 230°C bis 280°C, wobei je nach Polyamidtyp und spezifischen Anforderungen Abweichungen möglich sind.

Das im Extruder einer Spritzgießvorrichtung verflüssigte Polyamid wird schließlich unter hohem Druck in das Spritzgießwerkzeug eingespritzt. Die Einspritzgeschwindigkeit, der Druck und die Dosierung sind wichtige Parameter, die sorgfältig im Hinblick auf das entsprechende Polyamid eingestellt werden müssen, um eine optimale Formfüllung und Oberflächenqualität zu gewährleisten. Für das erfindungsgemäß ganz besonders bevorzugte Polyamid 6 (PA 6) liegt der Einspritzdruck vorzugsweise im Bereich von 1000 bis 2000 bar. Die genauen Werte können jedoch je nach Materialvariante ((glasfaser)verstärktes oder unverstärktes PA 6), Werkzeuggeometrie und spezifischen Anforderungen des Spritzgussprozesses variieren. Die Werkzeugtemperatur beim Spritzgießen von Polyamid 6 (PA6) liegt vorzugsweise im Bereich von 40°C bis 120°C, besonders bevorzugt im Bereich von 40°C bis 80°C. Für Strukturbauteile, bei denen Kristallinität wichtig ist, wird eine Werkzeugtemperatur im Bereich von 80 bis 120°C empfohlen. Dünnwandige Teile mit langem Fließweg können von einer höheren Werkzeugtemperatur profitieren, während dickwandige Teile mit einer niedrigeren Temperatur im Bereich von 20 bis 40°C besser verarbeitet werden können. Die Einspritzgeschwindigkeit bei Polyamid 6 (PA6) sollte im Allgemeinen hoch sein, um eine vollständige Formfüllung zu gewährleisten und Lunkerbildung zu vermeiden. Die Einspritzgeschwindigkeit kann aber je nach Material und Produktdesign variieren. Die ideale Einspritzgeschwindigkeit hängt von verschiedenen Faktoren ab, wie z.B. der Materialzusammensetzung (z.B. mit Glasfaser verstärktes PA6 kann eine etwas niedrigere Geschwindigkeit erfordern) und der Geometrie des Formteils. Es ist wichtig, die Einspritzgeschwindigkeit so anzupassen, dass sie zu den spezifischen Anforderungen des jeweiligen Bauteils passt. Für den Spritzguss von PA 6 wird ein Staudruck im Bereich von 40 bis 80 bar als Richtwert genannt. Neben der Einspritzgeschwindigkeit spielen auch die Schneckengeschwindigkeit, der Einspritzdruck und die Nachdruckzeit eine Rolle für den Einspritzprozess.

Überraschenderweise ist das erfindungsgemäß einzusetzende Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on soweit temperaturstabil, dass es unter den oben genannten Verarbeitungsverfahren nicht verbräunt.

Erfindungsgemäße, flammgeschützte Kunststoffprodukte sind vorzugsweise durch das Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on orange eingefärbt, wobei Farbtöne, die im RAL-Farbsystem der Farbnummer RAL2001, RAL2003, RAL2004, RAL2007, RAL2008, RAL2009, RAL2010 und RAL2011 entsprechen, besonders bevorzugt sind und die Farbtöne, die im RAL-Farbsystem der Farbnummer RAL 2001, RAL2003, RAL2008, RAL 2010 und RAL2011 entsprechen, ganz besonders bevorzugt sind.

Erfindungsgemäß zulässige "ähnliche Farbtöne" und von der vorliegenden Erfindung umfasst sind solche, deren Farbabstand im L*a*b*-System einen ΔE von <20, bevorzugt ein ΔE <10, besonders bevorzugt ΔE <5 zu einer mit "2" beginnenden Farbnummer der RAL-Farbtabelle aufweisen. Zur Erläuterung des in **EN ISO 11664-4** definierten ΔE siehe beispielsweise **https://de.wikipedia.org/wiki/Delta_E.**

### Orange

Im Rahmen der vorliegenden Erfindung gilt als Orange eine Farbe, die im RAL Farbsystem nach **https://de.wikipedia.org/wiki/RAL-Farbe#Orange** in der RAL Farbtabelle eine Farbnummer hat, die mit einer "2" beginnt. Im Einzelnen unterscheidet man zum Anmeldetag der vorliegenden Erfindung Orangetöne gemäß **Tab.1:**

**Tab.1**

| | | L* | a* | b* |
|---|---|---|---|---|
| RAL 2000 | Gelborange | 58,20 | 37,30 | 68,68 |
| RAL 2001 | Rotorange | 49,41 | 39,79 | 35,29 |
| RAL 2002 | Blutorange | 47,74 | 47,87 | 33,73 |
| RAL 2003 | Pastellorange | 66,02 | 41.22 | 52,36 |
| RAL 2004 | Reinorange | 56,89 | 50,34 | 49,81 |
| RAL 2005 | Leuchtorange | 72,27 | 87,78 | 82,31 |
| RAL 2007 | Leuchthellorange | 76,86 | 47,87 | 97,63 |
| RAL 2008 | Hellrotorange | 60,33 | 46,91 | 60,52 |
| RAL 2009 | Verkehrsorange | 55,83 | 47,79 | 48,83 |
| RAL 2010 | Signalorange | 55,39 | 40,10 | 42,42 |
| RAL 2011 | Tieforange | 59,24 | 40,86 | 64,50 |
| RAL 2012 | Lachsorange | 57,75 | 40,28 | 30,66 |
| RAL 2013 | Perlorange | 40,73 | 32,14 | 34,92 |

In **Tab.1** sind die geräteunabhängigen CIE L*a*b* Farbwerte für den jeweiligen RAL Wert angegeben: L* steht für die Luminanz, a* beschreibt den Farbort bezüglich der Rot-Grün-Achse und b* beschriebt den Farbort bezüglich der Gelb-Blau-Achse unter Verwendung von D65 Normlicht mit einem 10° Sichtfeld eines Normalbeobachters. Das Farbmodell ist in der **EN ISO 11664-4** "Colorimetry -- Part 4: CIE 1976 L*a*b* Colour space" genormt. Zu L*a*b*-Farbraum (auch: CIELAB) siehe: **https://de.wikipedia.org/wiki/Lab-Farbraum.** Jede Farbe im Farbraum ist durch einen Farbort mit den kartesischen Koordinaten {L*, a*, b*} definiert. Die a*b*-Koordinatenebene wurde in Anwendung der Gegenfarbentheorie konstruiert. Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte (dem Koordinatenursprung a*=0, b*=0) liegen alle unbunten Farben.

Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Die a*-Werte reichen von ca. -170 bis +100, die b*-Werte von -100 bis +150, wobei die Maximalwerte nur bei mittlerer Helligkeit bestimmter Farbtöne erreicht werden. Der CIELAB-Farbkörper hat im mittleren Helligkeitsbereich seine größte Ausdehnung, die aber je nach Farbbereich unterschiedlich in Höhe und Größe ist.

### Weitere bevorzugte Ausführungsformen der Erfindung

Vorzugsweise betrifft die Erfindung Kunststoffprodukte die durch einen nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** gekennzeichnet sind.

Besonders bevorzugt betrifft die Erfindung Kunststoffprodukte die durch einen Farbton, der im RAL-Farbsystem der Farbnummer RAL2001, RAL2003, RAL2004, RAL2007, RAL2008, RAL2009, RAL2010 oder RAL2011 entspricht, gekennzeichnet sind.

Ganz besonders bevorzugt betrifft die Erfindung Kunststoffspritzgussprodukte die durch einen nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** gekennzeichnet sind.

Insbesondere bevorzugt betrifft die Erfindung Kunststoffspritzgussprodukte die durch einen Farbton, der im RAL-Farbsystem der Farbnummer RAL2001, RAL2003, RAL2004, RAL2007, RAL2008, RAL2009, RAL2010 oder RAL2011 entspricht, gekennzeichnet sind.

In einer bevorzugten Ausführungsform betrifft die Erfindung Kunststoffprodukte mit einem Farbabstand ΔE <20 von den L*a*b* Koordinaten zu einer mit "2" beginnenden Farbnummer der RAL-Farbtabelle basierend auf Polymerzusammensetzungen enthaltend zusätzlich zum a) wenigstens einen Polyamid, b) dem wenigstens einen Flammschutzmittel, c) dem wenigstens einen Flammschutzmittel-Synergist und d) dem als Farbmittel einzusetzenden Isomerengemisch von 9,9'-Oxybis-12H-phthaloperin-12-on, 9,10-Oxybis-12H-phthaloperin-12-on und 10,10'-Oxybis-12H-phthaloperin-12-on noch e) wenigstens einen **Füll und/oder Verstärkungsstoff.** Bevorzugt wird Komponente e) zu 1 bis 150 Massenanteilen, besonders bevorzugt zu 5 bis 80 Massenanteilen, ganz besonders bevorzugt zu 10 bis 50 Massenanteilen, jeweils bezogen auf 100 Massenanteile Polyamid eingesetzt.

In einer weiteren bevorzugten Ausführungsform betrifft die Erfindung Kunststoffprodukte mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** basierend auf Polymerzusammensetzungen enthaltend zusätzlich zum a) wenigstens einen Polyamid, b) dem wenigstens einen Flammschutzmittel, c) dem wenigstens einen Flammschutzmittel-Synergist und d) dem als Farbmittel einzusetzenden Isomerengemisches von 9,9'-Oxybis-12H-phthaloperin-12-on, 9,10-Oxybis-12H-phthaloperin-12-on und 10,10'-Oxybis-12H-phthaloperin-12-on zusätzlich oder alternativ zur Komponente e) noch eine Komponente f) wenigstens ein **Additiv.** Vorzugsweise wird die Komponente f) zu 0,01 bis 80 Massenanteilen, besonders bevorzugt zu 0,05 bis 50 Massenanteilen, ganz besonders bevorzugt zu 0,1 bis 30 Massenanteilen, jeweils bezogen auf 100 Massenanteile Polyamid eingesetzt.

### Polyamide

Erfindungsgemäß einzusetzende **Polyamide** können nach verschiedenen Verfahren hergestellt und aus unterschiedlichen Bausteinen synthetisiert werden. Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden können.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Polyamide im Sinne der vorliegenden Erfindung umfassen auch Polyarylamide (PARA), wie sie beispielsweise als IXEF^{®} 1022 mit 50%iger Glasfaserverstärkung oder als IXEF^{®} 2057 mit Mineralverstärkung von Solvay Specialty Polymers bezogen werden können.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z. B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bisaminomethylcyclohexan, Phenylendiamine, Xylylendiamine, Aminocarbonsäuren wie z. B. Aminocapronsäure, bzw. die entsprechenden Lactame in Betracht. Besonders bevorzugt werden Caprolactame, insbesondere ε-Caprolactam eingesetzt. Copolyamide aus mehreren der genannten Monomeren sind eingeschlossen.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als besonders bevorzugte Polyamide werden Polyamid 6, Polyamid 66, Polyamid 46 und/oder teilaromatischen Copolyamide. Bevorzugte teilaromatische Copolyamide sind PA6T/6, PA6T/66, PA6T/6I oder PA6T/6I/66.

Erfindungsgemäß ganz besonders bevorzugte Polyamide sind Polyamid 6 (PA6) [CAS No. 25038-54-4] und Polyamid 66 (PA66) [CAS No. 25038-54-4], wobei Polyamid 6 insbesondere ganz besonders bevorzugt ist.

Die im Rahmen der vorliegenden Anmeldung benutzte Kennzeichnung der Polyamide entspricht der internationalen Norm **ISO 1874-1,** wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω- Aminocarbonsäure bzw. von dem davon abgeleiteten Lactam, im Falle des PA 6 also dem ε-Caprolactam, ausgegangen worden ist.

Das erfindungsgemäß bevorzugt einzusetzende PA6 [CAS Nr. 25038-54-4] hat vorzugsweise eine nach **ISO 307** in 0,5 gew.-%iger Lösung in 96 gew.-%iger Schwefelsäure bei 25°C zu bestimmende Viskositätszahl im Bereich von 80 bis 180 ml/g, besonders bevorzugt im Bereich von 85 bis 160 ml/g und ganz besonders bevorzugt im Bereich von 90 bis 140 ml/g. Erfindungsgemäß einzusetzendes Polyamid 6 ist beispielswiese als Durethan^{®} B26 bei der Lanxess Deutschland GmbH, Köln erhältlich.

Das erfindungsgemäß bevorzugt einzusetzende Polyamid 66 [CAS Nr. 32131-17-2] hat vorzugsweise eine nach **ISO 307** in 0,5 gew.-%iger Lösung in 96 gew.-%iger Schwefelsäure bei 25°C zu bestimmende Viskositätszahl im Bereich von 80 bis 180 ml/g auf, ganz besonders bevorzugt eine Viskositätszahl im Bereich von 85 bis 160 ml/g, insbesondere bevorzugt im Bereich von 90 bis 140 ml/g. Erfindungsgemäß einzusetzendes Polyamid 66 ist beispielsweise als Ultramid^{®} A24E01 bei der BASF SE, Ludwigshafen, erhältlich.

Erfindungsgemäß in den Polymerzusammensetzungen einzusetzendes Polyamid kann auch im Gemisch mit wenigstens einem anderen Polyamid und/oder wenigstens einem anderen Polymer eingesetzt werden. Bevorzugte andere Polymere werden ausgewählt aus der Gruppe Polyethylen, Polypropylen und Acrylnitril-Butadien-Styrol-Copolymerisat (ABS). Im Falle des Einsatzes wenigstens eines weiteren Polyamids oder wenigstens eines anderen Polymers erfolgt dieser vorzugsweise oder gegebenenfalls unter Einsatz wenigstens eines Kompatibilisators.

Dem in den Polymerzusammensetzungen erfindungsgemäß einzusetzendem Polyamid können übliche Additive, vorzugsweise dem Fachmann bekannte Entformungsmittel, Stabilisatoren und/oder Fließhilfsmittel bereits in der Schmelze zugemischt werden.

Die im Rahmen der vorliegenden Anmeldung benutzte Kennzeichnung der Polyamide (PA) entspricht der internationalen Norm ISO 1874-1, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω- Aminocarbonsäure bzw. von dem davon abgeleiteten Lactam, im Falle des PA 6 also dem ε-Caprolactam, ausgegangen worden ist.

### b) Flammschutzmittel

Um Brandschutzklassifizierungen wie UL 94 V0 oder GWFI 960°C (Glow Wire Flammability Index) zu erreichen, sind vom wenigstens einen Flammschutzmittel der Komponente b) oftmals nur geringe Dosierungen nötig.

Erfindungsgemäß bevorzugt als Komponente b) einzusetzende Phosphinsäuresalze sind Dialkylphosphinsäuresalze auszuwählen aus der Gruppe Aluminiummethylethylphosphinat Aluminiumtrisdiethylphosphinat, Aluminiumisopropylisobutylphosphinat, Aluminium-isopropyltertbutylphosphinat, Aluminiumdiisobutylphosphinat, Aluminiumtrismethylethylphosphinat, Zinkbisdiethylphosphinat, Zinkbismethylethylphosphinat und Mischungen davon. Besonders bevorzugt werden Aluminiumtrisdiethylphosphinat oder Zinkbisdiethylphosphinat eingesetzt. Insbesondere bevorzugt ist Aluminiumtrisdiethylphosphinat. Diese zumeist farblosen Flammschutzmittel werden von der Clariant International Ltd, Muttenz, Schweiz unter der Marke Exolit^{®} vertrieben, beispielsweise in reiner Form das Aluminiumtrisdiethylphosphinat (DEPAL) als Exolit^{®} OP1240 oder das Zinkbisdiethylphosphinat als Exolit^{®} OP950. Das im Rahmen der vorliegenden Anmeldung insbesondere bevorzugt als Komponente b) einzusetzende Aluminiumtrisdiethylphosphinat DEPAL wurde erstmalig von der Clariant GmbH, Frankfurt am Main, in WO 99/28327 A1 beschrieben und unter der CAS No. 225789-38-8 und dem Namen "Phosphinic acid, P,P-diethyl-aluminum salt (3:1)" in die Registry-Datenbank aufgenommen.

### c) Flammschutzmittel-Synergist

Die Flammschutzwirkung eines Flammschutzmittels kann durch Verwendung von Synergisten zusätzlich verbessert werden, indem sie die Branddauer oder Nachbrennzeiten verkürzen, oder ein Abtropfen des im Falle von Brandhitze geschmolzenen bzw. brennenden Polymers verhindern. Beispielsweise ist dem Fachmann aus KR 890 004 333 B1 der Einsatz von Antimontrioxid (Sb₂O₃) als Synergist in Kombination mit halogenierten Flammschutzmitteln bekannt. Aus DE 3 808 493 A1 ist dem Fachmann der Einsatz aromatischer Polyamide und/oder Polyimidamide als Antidrippingmittel bekannt, die fernerhin in Kombination mit anderen, üblichen Flammschutzmitteln synergistisch wirken und das brennende Abtropfen von überwiegend aliphatischen/cycloaliphatischen Polyamiden verhindern.

Erfindungsgemäß wird das Flammschutzmittel der Komponente b) mit c) wenigstens einem Flammschutzmittel-Synergist auszuwählen aus Melaminpolyphosphat (CAS No. 1312753-42-6 bzw. 218768-84-4) oder Aluminiumphosphonat (CAS No. 2278203-39-5) eingesetzt. Melaminpolyphosphat ist als Melapur^{®} 200/70 bei BASF SE, Ludwigshafen, Deutschland erhältlich. Aluminiumphosphonat ist als sek. Aluminiumphosphonat gemäß der Formel Al₂(HPO₃)₃ • (H₂O)_{q} mit q im Bereich von 0 bis 4 nach Beispiel 2 der WO 2013/083247 A1 erhältlich.

Besonders bevorzugt sind die Kombinationen der Komponenten b) und c) in Form von Aluminiumtrisdiethylphosphinat (DEPAL) mit Melaminpolyphosphat und Aluminiumtrisdiethylphosphinat (DEPAL) mit Aluminiumphosphonat.

Im Rahmen der vorliegenden Erfindung wurde zudem gefunden, dass Zinkbisdiethylphosphinat oder Zinkbismethylethylphosphinat nicht notwendigerweise einen Flammschutzmittel-Synergist erfordern. Die vorliegende Erfindung betrifft deshalb in einer bevorzugten Ausführungsform Kunststoffprodukte aus Polymerzusammensetzungen enthaltend a) wenigstens ein Polyamid, b) wenigstens ein Flammschutzmittel aus Zinkbisdiethylphosphinat oder Zinkbismethylethylphosphinat und d) als Farbmittel das Isomerengemisch von 9,9'-Oxybis-12H-phthaloperin-12-on, 9,10-Oxybis-12H-phthaloperin-12-on und 10,10'-Oxybis-12H-phthaloperin-12-on.

Als Komponente c) einzusetzende Flammschutzmittel-Synergisten werden in Form fertiger Mischungen mit den Flammschutzmitteln der Komponente b) beispielsweise von der Clariant International Ltd, Muttenz, Schweiz ebenfalls unter der Marke Exolit^{®} vertrieben. Genannt seien hier beispielsweise Exolit^{®} OP1311, Exolit^{®} OP1314, Exolit^{®} OP1316, Exolit^{®} OP1400, Exolit^{®} OP1402, Exolit^{®} OP1466 oder Exolit^{®} OP1260.

### Weitere Komponenten

In bevorzugter Ausführungsform wird in den Polymerzusammensetzungen zusätzlich zum Polyamid und zum Farbmittel wenigstens ein **Füll- oder Verstärkungsstoff** eingesetzt. Dabei können auch Mischungen aus zwei oder mehreren unterschiedlichen Füllstoffen und/oder Verstärkungsstoffen eingesetzt werden.

Vorzugsweise wird wenigstens ein Füll- oder Verstärkungsstoff aus der Gruppe Kohlenstofffasern [CAS Nr. 7440-44-0], Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas) [CAS Nr. 65997-17-3], amorphe Kieselsäure [CAS Nr. 7631-86-9], Quarzmehl [CAS Nr. 14808-60-7], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8], Pseudoböhmit der Formel AIO(OH), Magnesiumcarbonat [CAS Nr. 12125-28-9] und Talkum [CAS Nr. 14807-96-6] eingesetzt.

Unter den faserförmigen Füll- oder Verstärkungsstoffen sind Glasfasern und Wollastonit besonders bevorzugt, wobei Glasfasern ganz besonders bevorzugt sind. Bezüglich der Glasfasern unterscheidet der Fachmann geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 µm liegt.

Erfindungsgemäß bevorzugt als Füll- oder Verstärkungsstoff einzusetzende Glasfasern sind geschnittene Langglasfasern mit einer mittels Laserbeugungs-Partikelgrößenanalyse (lasergranulometrische Messung bzw. Laserdiffraktometrie) gemäß **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Zu Laserbeugungs-Partikelgrößenbestimmung/Laserdiffraktometrie gemäß der Norm **ISO 13320** siehe:
**https://de.wikipedia.org/wiki/Laserbeugungs-Partikelgr%C3%B6%C3%9Fenanalyse**

Die Glasfasern können bedingt durch die Verarbeitung zur Formmasse (Compoundierung) oder zum Erzeugnis, insbesondere im Spritzgussprozess, in der Formmasse oder im Erzeugnis einen kleineren d90- bzw. d50-Wert aufweisen, als die ursprünglich eingesetzten Glasfasern. So liegt der arithmetische Mittelwert der Glasfaserlänge nach der Verarbeitung häufig nur noch im Bereich von 150 µm bis 300 µm, weshalb sich die in der vorliegenden Beschreibung genannten Längen-, Breiten- und Durchmesserangaben zu Füll- und Verstärkungsstoffen, insbesondere zu Glasfasern, auf den Zustand vor jeglicher Verarbeitung, insbesondere vor einer Compoundierung oder vor einer Verarbeitung, insbesondere im Spritzguss, beziehen.

Bevorzugte, als Füll- oder Verstärkungsstoff einzusetzende Glasfasern haben einen mittels Laserdiffraktometrie gemäß **ISO 13320** zu bestimmenden mittleren Faserdurchmesser im Bereich von 7 bis 18 µm, besonders bevorzugt im Bereich von 9 bis 15 µm.

Die als Füll- oder Verstärkungsstoff vorzugsweise einzusetzenden Glasfasern werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt.

### Additive

Unter der Prämisse des Erhalts einer hohen Lasertransmission enthalten die erfindungsgemäßen Polymerzusammensetzungen oder Kunststoffprodukte zusätzlich zu den Komponenten a), b), c) und d) noch wenigstens ein von den Komponenten b), c) und d) verschiedenes e) **Additiv.** Bevorzugt einzusetzende Additive e) sind Füll- und Verstärkungsstoffe, Antioxidantien, (Thermo)Stabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Schlagzähmodifikatoren, Gleit- und/oder Entformungsmittel, Komponenten zur Verringerung der Wasseraufnahme, Fließhilfsmittel oder Elastomermodifikatoren, kettenverlängernd wirkende Additive, sowie vom Isomerengemisch in Form von 9,9'-Oxybis-12H-phthaloperin-12-on, 9,10-Oxybis-12H-phthaloperin-12-on und 10,10'-Oxybis-12H-phthaloperin-12-on verschiedene Farbmittel. Die Additive können alleine oder in Mischung bzw. in Form von Masterbatchen eingesetzt werden.

Bevorzugte **(Thermo)Stabilisatoren** als Additiv sind sterisch gehinderte Phenole, insbesondere solche enthaltend mindestens eine 2,6-Di-tert.-butylphenyl-Gruppe und/oder 2-tert.-Butyl-6-methylphenyl-Gruppe, ferner Phosphite, Hypophosphite, insbesondere Natriumhypophosphit NaH₂PO₂, Hydrochinone, aromatische sekundäre Amine, substituierte Resorcine, Salicylate, Benzotriazole und Benzophenone, 3,3'-Thiodipropionsäureester sowie verschieden substituierte Vertreter dieser Gruppen oder deren Mischungen. Weitere Stabilisatoren im Sinne der vorliegenden Erfindung sind Zinkoxid, Zinkborat sowie Calcium- oder Zink(hydroxy)stannate. Die als Additiv einzusetzenden (Thermo)Stabilisatoren werden vorzugsweise zu 0,01 bis 5 Massenanteilen, besonders bevorzugt zu 0,05 bis 3 Massenanteilen, jeweils bezogen auf 100 Massenanteile Polyamid eingesetzt.

Als Additiv einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt. Die als Additiv einzusetzenden UV-Stabilisatoren werden vorzugsweise zu 0,01 bis 2 Massenanteilen, besonders bevorzugt zu 0,1 bis 1 Massenanteilen, jeweils bezogen auf 100 Massenanteile Polyamid eingesetzt.

Als Additiv einzusetzende und vom Isomerengemisch in Form von 9,9'-Oxybis-12H-phthaloperin-12-on, 9,10-Oxybis-12H-phthaloperin-12-on und 10,10'-Oxybis-12H-phthaloperin-12-on verschiedene **Farbmittel** werden bevorzugt, anorganische Pigmente, insbesondere Ultramarinblau, Bismutvanadat, Eisenoxid, Titandioxid, Zinksulfid, Zinn-Titan-Zinkoxide [CAS Nr. 923954-49-8], weiterhin organische Farbmittel, bevorzugt Phthalocyanine, Chinacridone, Benzimidazole, insbesondere Ni-2-hydroxy-napthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, 1,3-Dihydro-5,6-bis(((2-hydroxy-1-naphthyl)methylen)amino-2H-benzimidazol-2-onato(2-)-N5,N6,O5,O6)nickel, insbesondere C.I. Solvent Yellow 163 [CAS Nr. 13676-91-0] eingesetzt, wobei diese Aufzählung nicht abschließend ist. In einer Ausführungsform, werden unter Verlust der lasertransmittierenden Eigenschaft für Laser absorbierende Kunststoffprodukte als Farbmittel auch Ruß oder Nigrosin eingesetzt.

Als Additiv einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Bevorzugt als Additiv einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Additiv einzusetzende **Elastomermodifikatoren** umfassen u.a. ein oder mehrere Pfropfpolymerisate von

| | |
|---|---|
| E.1 | 5 bis 95 Gew.-%, vorzugsweise 30 bis 90 Gew.-%, wenigstens eines Vinylmonomeren und |
| E.2 | 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Gewichtsprozente sich auf 100 Gew.-% Elastomermodifikator beziehen. Die Pfropfgrundlage E.2 hat im allgemeinen eine mittels Laserdiffraktometrie gemäß ISO 13320 zu bestimmende mittlere Teilchengröße d50-Wert von 0,05 bis 10 µm, vorzugsweise 0,1 bis 5 µm, besonders bevorzugt 0,2 bis 1 µm. |

Monomere zu E.1 sind vorzugsweise Gemische aus

| | |
|---|---|
| E.1.1 | 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-(C₁-C₈)-Alkylester, insbesondere. Methylmethacrylat, Ethylmethacrylat) und |
| E.1.2 | 1 bis 50 Gew.-% Vinylcyanide, insbesondere ungesättigte Nitrile wie Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, |
| | insbesondere Maleinsäureanhydrid oder N-Phenyl-Maleinimid, wobei die Gewichtsprozente sich auf 100 Gew.-% Elastomermodifikator beziehen. |

Bevorzugte Monomere E.1.1 sind auszuwählen aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat. Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon- , Chloropren und Ethylen/Vinylacetat-Kautschuke. EPDM steht für Ethylen-Propylen-Dien-Kautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Als Additiv einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse. Montanwachse im Sinne der vorliegenden Erfindung sind Mischungen aus geradkettigen, gesättigten Carbonsäuren mit Kettenlängen von 28 bis 32 C-Atomen.

### Glasfaserverstärkte Kunststoffprodukte

Vorzugsweise betrifft die Erfindung Kunststoffprodukte aus Polymerzusammensetzungen worin zusätzlich zu den Komponenten a), b), c) und d) als Additiv e) Füll- oder Verstärkungsstoff Glasfasern eingesetzt werden, vorzugsweise geschnittene Langglasfasern mit einer mittels Laserbeugungs-Partikelgrößenanalyse (lasergranulometrische Messung bzw. Laserdiffraktometrie) nach **ISO 13320** zu bestimmenden mittleren Ausgangslänge im Bereich von 1 bis 50 mm. Vorzugsweise liegt die nach **ISO 13320** zu bestimmende mittlere Ausgangslänge der geschnittenen Langglasfasern im Bereich von 1 bis 10 mm, ganz besonders bevorzugt im Bereich von 2 bis 7 mm.

Vorzugsweise werden in den Polymerzusammensetzungen auf 100 Massenanteile Polyamid 1 bis 150 Massenanteile, bevorzugt 5 bis 80 Massenanteile, besonders bevorzugt 10 bis 50 Massenanteile geschnittene Langglasfasern eingesetzt.

Vorzugsweise weisen die geschnittenen Langglasfasern einen mittels Laserdiffraktometrie nach **ISO 13320** zu bestimmenden mittleren Faserdurchmesser im Bereich von 7 bis 18 µm auf, besonders bevorzugt im Bereich von 9 bis 15 µm.

Die Erfindung betrifft besonders bevorzugt Kunststoffprodukte mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** basierend auf Polymerzusammensetzungen enthaltend wenigstens ein Polyamid, die Komponenten b) und c) sowie ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, vorzugsweise im Verhältnis von 1 : 1 : 0,8 -1,5 bis 1 : 1,5 : 0,8 - 1,5, insbesondere bevorzugt zusätzlich mit einer nach **ISO 13320** mittels Laserdiffraktometrie zu bestimmenden mittleren Teilchengröße d50 im Bereich von 1 bis 12 µm sowie Glasfasern, vorzugsweise geschnittene Langglasfasern mit einer mittels Laserbeugungs-Partikelgrößenanalyse (lasergranulometrische Messung bzw. Laserdiffraktometrie) nach **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Bevorzugt wird als Polyamid wenigstens Polyamid 6 oder Polyamid 66 eingesetzt, insbesondere Polyamid 6.

Insbesondere ganz besonders bevorzugt liegen in diesen Kunststoffprodukten 1 bis 150 Massenanteile, bevorzugt 5 bis 80 Massenanteile, besonders bevorzugt 10 bis 50 Massenanteile Glasfasern auf 100 Massenanteile des wenigstens einen Polyamids, vorzugsweise wenigstens Polyamid 6 oder Polyamid 66, insbesondere Polyamid 6, vor.

### Verfahren

Die Erfindung betrifft auch ein Verfahren zur Herstellung von Kunststoffprodukten, insbesondere von Kunststoffspritzgussprodukten, indem man
a) wenigstens ein Polyamid,
b) wenigstens ein Flammschutzmittel aus wenigstens einem Phosphinsäuresalz der Formel (I) und/oder wenigstens einem Diphosphinsäuresalz der Formel (II) und/oder deren Polymere, 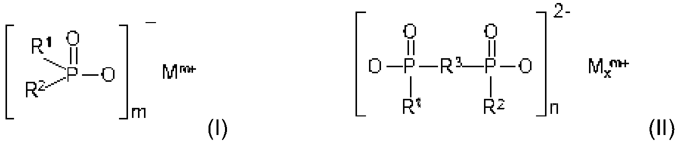 worin
   R¹, R² gleich oder verschieden sind und für ein lineares oder verzweigtes C₁-C₆-Alkyl, und/oder für C₆-C₁₄-Aryl stehen,
   R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
      - M: für Aluminium oder Zink steht,
      - m: für eine ganze Zahl von 1 bis 4 steht;
      - n: für eine ganze Zahl von 1 bis 3 steht,
      - x: für 1 und 2 steht,
   wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on
   zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik (GIT), Wasserinjektionstechnik (WIT) oder Projektilinjektionstechnik (PIT), in Extrusionsverfahren, einschließlich in der Profil-Extrusion, oder durch Blasformen, weiter verarbeitet.

Vorzugsweise betrifft die Erfindung Kunststoffprodukte aus Polymerzusammensetzungen enthaltend
a) wenigstens ein Polyamid, vorzugsweise Polyamid 6 oder Polyamid 66,
b) wenigstens ein Flammschutzmittel aus wenigstens einem Phosphinsäuresalz der Formel (I) 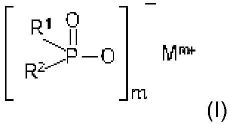 worin
   R¹, R² gleich oder verschieden sind und für ein lineares oder verzweigtes C₁-C₆-Alkyl stehen,
   - M: für Aluminium oder Zink steht, insbesondere für Aluminium,
   - m: für eine ganze Zahl von 1 bis 4 steht;
c) wenigstens einen Flammschutzmittel-Synergist auszuwählen aus Melaminpolyphosphat oder Aluminiumphosphonat und
d) wenigstens ein Farbmittel enthaltend das Isomerengemisch von 9,9'-Oxybis-12H-phthaloperin-12-on, 9,10-Oxybis-12H-phthaloperin-12-on und 10,10'-Oxybis-12H-phthaloperin-12-on.

Vorzugsweise werden dabei
A) auf 100 Massenanteile des wenigstens einen Polyamids, vorzugsweise Polyamid 6 oder Polyamid 66,
B) 2 bis 100 Massenanteile, bevorzugt 5 bis 60 Massenanteile, besonders bevorzugt 7 bis 40 Massenanteile, insbesondere bevorzugt 8 bis 30 Massenanteile des wenigstens einen Flammschutzmittels b),
C) 0,2 bis 50 Massenanteile, bevorzugt 0,5 bis 40 Massenanteile, besonders bevorzugt 0,75 bis 35 Massenanteile des wenigstens einen Flammschutzmittel-Synergist c) und
D) 0,01 bis 5 Massenanteile des wenigstens einen Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on eingesetzt.

Vorzugsweise weisen auch die nach dem erfindungsgemäßen Verfahren erhältlichen Kunststoffprodukte einen nach **DIN 5033 (1979)** zu bestimmenden Farbabstand ΔE <10 von den L*a*b* Koordinaten zu einer mit "2" beginnenden Farbnummer der RAL-Farbtabelle gemäß Farbmodell nach **EN ISO 11664-4** auf.

Besonders bevorzugt weisen die nach dem erfindungsgemäßen Verfahren erhältlichen Kunststoffprodukte einen nach **DIN 5033 (1979)** zu bestimmenden Farbabstand ΔE <10 von den L*a*b* Koordinaten zu einer mit "2" beginnenden Farbnummer der RAL-Farbtabelle gemäß Farbmodell nach **EN ISO 11664-4** auf, besonders bevorzugt einen Farbabstand ΔE <5..

Insbesondere bevorzugt wird als Polyamid Polyamid 6 eingesetzt.

Ganz besonders bevorzugt betrifft die Erfindung ein Verfahren worin zusätzlich zu den Komponenten a) und b) und c) und d) noch e) Glasfasern mit einer mittels Laserbeugungs-Partikelgrößenanalyse (lasergranulometrische Messung bzw. Laserdiffraktometrie) nach **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm eingesetzt werden.

Vorzugsweise werden im erfindungsgemäßen Verfahren 1 bis 150 Massenanteile, besonders bevorzugt 5 bis 80 Massenanteile, ganz besonders bevorzugt 10 bis 50 Massenanteile Glasfasern auf 100 Massenanteile Polyamid eingesetzt.

Insbesondere bevorzugt haben auch im erfindungsgemäßen Verfahren die Glasfasern zudem einen mittels Laserdiffraktometrie nach **ISO 13320** zu bestimmenden mittleren Faserdurchmesser im Bereich von 7 bis 18 µm, besonders bevorzugt im Bereich von 9 bis 15 µm.

Die Erfindung betrifft besonders bevorzugt ein Verfahren zur Herstellung von Kunststoffprodukten in Form von lasertransparenten, orangen und flammgeschützten Erzeugnissen oder Fügepartnern zur weiteren Verarbeitung beim Laserdurchstrahlschweißen im Wellenlangenbereich von 800 nm bis 1200 nm. Vorzugsweise wird im Rahmen des Laserdurchstrahlschweißens ein Nd:YAG-Laser (1064 nm) oder ein Hochleistungsdiodenlaser (800- 1000 nm) angewandt.

Zur Klarstellung sei angemerkt, dass vom Rahmen der vorliegenden Erfindung alle im Rahmen der Elektromobilitätskomponenten aufgeführten allgemeinen oder in Vorzugsbereichen genannten Definitionen und Parameter in beliebigen Kombinationen von den erfindungsgemäßen Verfahren mit umfasst sind.

### Verwendungen

Vorzugsweise betrifft die Erfindung die Verwendung des Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on zur Herstellung flammgeschützter Kunststoffprodukte wenn diese
a) wenigstens ein Polyamid,
b) wenigstens ein Flammschutzmittel aus wenigstens einem Phosphinsäuresalz der Formel (I) und/oder wenigstens einem Diphosphinsäuresalz der Formel (II) und/oder deren Polymere, 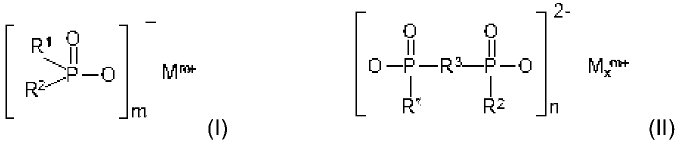 worin
   R¹, R² gleich oder verschieden sind und für ein lineares oder verzweigtes C₁-C₆-Alkyl, und/oder für C₆-C₁₄-Aryl stehen,
   R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
      - M: für Aluminium oder Zink steht,
      - m: für eine ganze Zahl von 1 bis 4 steht;
      - n: für eine ganze Zahl von 1 bis 3 steht,
      - x: für 1 und 2 steht,
   wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat enthalten.

Besonders bevorzugt betrifft die Erfindung die Verwendung des Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on zur Herstellung flammgeschützter Kunststoffprodukte wenn diese
a) wenigstens ein Polyamid, vorzugsweise Polyamid 6 oder Polyamid 66,
b) wenigstens ein Flammschutzmittel aus wenigstens einem Phosphinsäuresalz der Formel (I) 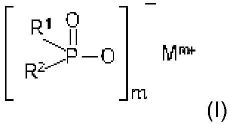 worin
   R¹, R² gleich oder verschieden sind und für ein lineares oder verzweigtes C₁-C₆-Alkyl stehen,
   - M: für Aluminium oder Zink steht, insbesondere für Aluminium,
   - m: für eine ganze Zahl von 1 bis 4 steht;
und c) wenigstens einen Flammschutzmittel-Synergist auszuwählen aus Melaminpolyphosphat oder Aluminiumphosphonat enthalten.

Auch im Rahmen der erfindungsgemäßen Verwendung werden vorzugsweise auf 100 Massenanteile a) des wenigstens einen Polyamids
2 bis 100 Massenanteile, bevorzugt 5 bis 60 Massenanteile, besonders bevorzugt 7 bis 40 Massenanteile, insbesondere bevorzugt 8 bis 30 Massenanteile b) des wenigstens einen Flammschutzmittels,
0,2 bis 50 Massenanteile, bevorzugt 0,5 bis 40 Massenanteile, besonders bevorzugt 0,75 bis 35 Massenanteile c) des wenigstens einen Flammschutzmittel-Synergist
und 0,01 bis 5 Massenanteile des d) wenigstens einen Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, eingesetzt.

In bevorzugter Ausführungsform werden auch im Rahmen der erfindungsgemäßen Verwendung zusätzlich zu den Komponenten a) und b) und c) und d) noch e) Glasfasern mit einer mittels Laserbeugungs-Partikelgrößenanalyse (lasergranulometrische Messung bzw. Laserdiffraktometrie) nach ISO 13320 zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm, eingesetzt.

Vorzugsweise werden auch im Rahmen der erfindungsgemäßen Verwendung 1 bis 150 Massenanteile, besonders bevorzugt 5 bis 80 Massenanteile, ganz besonders bevorzugt 10 bis 50 Massenanteile Glasfasern auf 100 Massenanteile Polyamid eingesetzt.

Insbesondere bevorzugt haben auch im Rahmen der erfindungsgemäßen Verwendung die Glasfasern zudem einen mittels Laserdiffraktometrie nach ISO 13320 zu bestimmenden mittleren Faserdurchmesser im Bereich von 7 bis 18 µm, besonders bevorzugt im Bereich von 9 bis 15 µm.

Vorzugsweise betrifft die Erfindung die Verwendung eines Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on zur Herstellung von Kunststoffprodukten mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** wenn diese a) wenigstens ein Polyamid und die oben genannten Komponenten b) das wenigstens eine Flammschutzmittel und c) den wenigstens einen Flammschutzmittel-Synergist enthalten.

Vorzugsweise handelt es sich auch bei der erfindungsgemäßen Verwendung bei den Kunststoffprodukten um Kunststoffspritzgussprodukte. Vorzugsweise handelt es sich bei der Verwendung des Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on um als Kunststoffprodukte lasertransparente, orange, flammgeschützte Erzeugnisse oder Fügepartner, besonders bevorzugt um diese beim Laserdurchstrahlschweißen im Wellenlangenbereich von 800 nm bis 1200 nm einzusetzen. Vorzugsweise wird im Rahmen dieser Verwendung ein Nd:YAG-Laser (1064 nm) oder ein Hochleistungsdiodenlaser (800 - 1000 nm) angewandt.

Zur Klarstellung angemerkt sei, dass vom Rahmen der beanspruchten Verwendung alle im Rahmen der oben genannten Kunststoffprodukte bzw. erfindungsgemäßen Verfahren aufgeführten allgemeinen oder in Vorzugsbereichen genannten Definitionen und Parameter in beliebigen Kombinationen mit umfasst sind.

### Beispiele

Zum Nachweis der erfindungsgemäß beschriebenen Verbesserungen der Eigenschaften wurden zunächst durch Compoundierung entsprechende Polyamid basierte Polymerzusammensetzungen angefertigt. Die einzelnen Komponenten wurden hierzu in einem Zweiwellenextruder (Leistritz LSM 30-34der Leistritz AG (Nürnberg, Deutschland)) bei Temperaturen zwischen 270 und 300°C gemischt, als Strang ausgetragen, bis zur Granulierbarkeit abgekühlt und granuliert. Nach dem Trocknen (in der Regel zwei Tage bei 80°C im Vakuumtrockenschrank) erfolgte die Verarbeitung des Granulats im Spritzguss bei Temperaturen im Bereich von 270 bis 290°C zu Normprüfkörpern für die jeweiligen Prüfungen.

### Edukte:

| | |
|---|---|
| Komponente a) | Polyamid 6 (Durethan^{®} B30S, Fa. Envalior Deutschland GmbH, Düsseldorf, Deutschland) |
| Komponente b) & Komponente c) | Exolit^{®} OP 1311 der Clariant International Ltd., Muttenz, Schweiz, enthaltend Aluminiumtrisdiethylphosphinat (CAS No. 225789-38-8) und Melaminpolyphosphat (CAS No. 1312753-42-6) |
| Komponente b) & Komponente c') | Exolit^{®} OP 1400 der Clariant International Ltd., Muttenz, Schweiz, enthaltend Aluminiumtrisdiethylphosphinat (CAS No. 225789-38-8) und Aluminiumphosphonat (CAS No. 2278203-39-5) |
| Komponente d') | Farbmittel gemäß WO 2020/187702 A1 bzw. 10,10'-Oxy-bis-12H-phthaloperin-12-on [CAS Nr. 203576-97-0] von Angene International Limited, London |
| Komponente d): | Farbmittel mit einer nach ISO 13320 mittels Laserdiffraktometrie zu bestimmenden mittleren Teilchengröße d50 im Bereich von 5 µm enthaltend die Isomere 9,9'-Oxybis-12H-phthaloperin-12-on, 9,10-Oxybis-12H-phthaloperin-12-on und 10,10'-Oxybis-12H-phthaloperin-12-on im Verhältnis 1 : 1,2 : 1, hergestellt nach folgender Synthesevorschrift: |

### Synthesevorschrift für Komponente d)

### Herstellung des Farbmittels enthaltend die Isomere 9,9'-Oxybis-12H-phthaloperin-12-on, 9,10-Oxybis-12H-phthaloperin-12-on und 10,10'-Oxybis-12H-phthaloperin-12-on im Verhältnis 1 : 1,2 : 1

300 g Phenol wurden bei einer Temperatur von 60°C aufgeschmolzen. Diesem wurden 45 g (285 mmol) 1,8-Diaminonaphthalin und 3.1 g 2,6-Lutidin (28,5 mmol) zugegeben und die Mischung für 30 Minuten gerührt. Anschließend wurden 45 g (145 mmol) 4,4-Oxidiphthalsäureanhydrid eingetragen und die Reaktionsmischung für weitere 30 Minuten gerührt. Danach wurde die Reaktionsmischung auf 175°C aufgeheizt und bei dieser Temperatur für 10 Stunden gehalten und das dabei entstehende Reaktionswasser abdestilliert. Zu der Reaktionsmischung wurden dann bei einer Temperatur von 175°C 295 g Methanol zugegeben und innerhalb einer Stunde die Temperatur der Reaktionsmischung auf 30°C abgekühlt. Das Reaktionsprodukt wurde auf einer Nutsche isoliert und anschließend in 300 g Phenol bei 175°C für 45 Minuten gerührt. Es wurden anschließend bei einer Temperatur von 175°C 295 g Methanol zugegeben und innerhalb von drei Stunden die Temperatur der Reaktionsmischung auf 30°C abgekühlt. Das Reaktionsprodukt wurde auf einer Nutsche isoliert und zunächst mit 440 g Methanol und dann mit 800 g Wasser gewaschen und in einem Vakuumtrockenschrank bei 80°C und 150 mbar getrocknet. Von dem Farbstoff wurde die Isomerenverteilung zu 1 : 1,2 : 1, sowie die mittlere Teilchengröße d50 mit 5 µm bestimmt.

**Tab.2**

| | | Bsp.1 | Bsp. 2 | Vgl. 1 |
|---|---|---|---|---|
| Komponente a) | Massenanteile | 100 | 100 | 100 |
| Komponente b) | Massenanteile | 21,5 | 21,5 | 21,5 |
| Komponente c) | Massenanteile | 5,7 | | 5,7 |
| Komponente c') | Massenanteile | | 10,8 | |
| Komponente d) | Massenanteile | 0,3 | 0,3 | |
| Komponente d') | Massenanteile | | | 0,3 |
| Flammschutz | Klasse | V-0 | V-0 | V-0 |
| Lasertransparenz | Reduzierung der Transparenz | +++ | +++ | +++ |
| Schlieren nach Spritzguss | Sichtprüfung | +++ | +++ | ++ |
| Verbräunung nach Spritzguss | Sichtprüfung durch Vergleich der RAL Farbtöne ΔE<10 | RAL 2001 | RAL 2001 | RAL 8023 |

Die in der **Tab.2** dargestellten Prüfergebnisse zeigen, dass die erfindungsgemäßen Beispiele neben der höchsten Brandschutzklassifizierung V-0 eine hervorragende Lasertransparenz (+++) aufwiesen und die Prüfkörper nach dem Spritzguss schlierenfrei waren (+++). Nach dem Spritzgießen wiesen die erfindungsgemäßen Vielzweckprüfkörper (Bsp.1 und Bsp.2) gemäß **DIN EN ISO 527** vom Typ 1A RAL 2001 (Rotorange) mit einem ΔE von <10 auf und zeigten im Gegensatz zu Vgl.1 (RAL 8023) keine Verbräunungen.

### Bestimmungsmethoden

Im Rahmen der vorliegenden Erfindung wurde die Isomerenverteilung des Isomerengemisches von 9,9'-Oxybis-12H-phthaloperin-12-on, 9,10-Oxybis-12H-phthaloperin-12-on und 10,10'-Oxybis-12H-phthaloperin-12-on mittels HPLC (high pressure liquid chromatography) bestimmt und kann als Maß für die Farbbrillanz der in **Tab.2** beschriebenen Polymerzusammensetzungen bzw. daraus mittels Spritzguss hergestellter Kunststoffprodukte in Form von 60•40•2 mm³-Platten den C*-Wert nach DIN EN ISO 11664-4 mit einem d/8° Spektralphotometer in einer koloristischen Messung herangezogen werden (D65 Normlicht, CIE 1976 L*a*b* Colour Space). Die HPLC ist ein Flüssigchromatografie-Verfahren mit der man nicht nur Substanzen trennt, sondern diese auch über Standards identifizieren und quantifizieren (die genaue Konzentration bestimmen) kann. Das Vorhandensein von Farbschlieren ist auf die nach ISO 13320 zu bestimmende mittlere Teilchengröße d50 des in den Polymerzusammensetzungen erfindungsgemäß einzusetzenden Farbmittels zurückzuführen.

Unter einer hohen Lasertransmission gilt erfindungsgemäß eine Lasertransmission von mindestens 30%, bevorzugt mindestens 40%, besonders bevorzugt mindestens 50% gemessen an Probeplättchen einer Dicke von 0,75 mm mit dem Transmissionsmessgerat LPKF TMG3 der Firma LPKF Laser 8 Electronics AG, Garbsen, Deutschland bei einer Laserwellenlange von 980 nm. Die Messungen im Rahmen der vorliegenden Erfindung erfolgten auf Basis der DVS-Richtlinie 2243 (01/2014) "Laserstrahlschweißen thermoplastischer Kunststoffe" anhand von Rundplatten mit 80 mm Durchmesser und 0,75 mm Dicke im nahen Infrarot (NIR). Das Transmissionsmessgerät LPKF TMG3 der Firma LPKF Laser & Electronics AG wurde vor den Messungen mit einem nach **DIN EN ISO/IEC 17025** erzeugten Messnormal kalibriert. Die Messungen erfolgten im Rahmen der vorliegenden Erfindung bei einer Laserwellenlänge von 980 nm.

Eine Reduzierung der Transmission von < 3% bei 980 nm, im Vergleich zu einer Kunststoffprobe ohne Komponente d) dem Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, wird im Rahmen der vorliegenden Erfindung mit +++ bewertet. Eine Reduzierung der Transmission bei 980 nm im Bereich von 3 bis 5 %, im Vergleich zu einer Kunststoffprobe ohne Komponente d) dem Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, wird im Rahmen der vorliegenden Erfindung mit ++ bewertet. Eine Reduzierung der Transmission bei 980 nm im Bereich von 5 bis 10%, im Vergleich zu einer Kunststoffprobe ohne Komponente d) dem Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, wird im Rahmen der vorliegenden Erfindung nur noch mit + bewertet.

Der Nachweis von Schlieren nach Spritzguss wurde mittels Sichtprüfung bewertet, wobei "+++" schlierenfrei, "++" schlierenreduziert und "-" schlierenenthaltend bedeutet.

Der Nachweis der Verbräunung durch Spritzguss erfolgte mittels Bestimmung des RAL Farbtons des Spritzgusserzeugnisses in Form von Vielzweckprüfkörper gemäß **DIN EN ISO 527** vom Typ 1A durch den Abgleich mit einer RAL Farbkarte. Die bekanntesten RAL Farbtöne sind im RAL Classic System definiert, welches 213 Farben umfasst. Diese sind durch eine vierstellige Nummer, beginnend mit "RAL", und einem optionalen Farbnamen gekennzeichnet. Eine RAL Farbkarte ist ein physischer Farbfächer, der die verschiedenen RAL Farben zeigt. Der Farbton des Spritzgusserzeugnisses wurde durch visuellen Abgleich mit der Karte ermittelt.

## Patentansprüche

1. Kunststoffprodukte aus Polymerzusammensetzungen enthaltend
a) wenigstens ein Polyamid,
b) wenigstens ein Flammschutzmittel aus wenigstens einem Phosphinsäuresalz der Formel (I) und/oder wenigstens einem Diphosphinsäuresalz der Formel (II) und/oder deren Polymere, 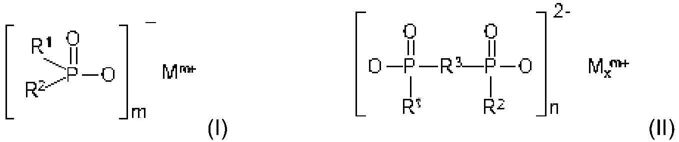 worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
M für Aluminium oder Zink steht,
m für eine ganze Zahl von 1 bis 4 steht;
n für eine ganze Zahl von 1 bis 3 steht,
x für 1 und 2 steht,
wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on.

2. Kunststoffprodukte gemäß Anspruch 1 **dadurch gekennzeichnet, dass** als Komponente b) wenigstens einem Phosphinsäuresalz der Formel (I) 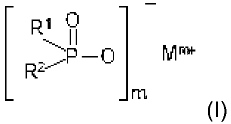 eingesetzt wird, worin
R¹, R² gleich oder verschieden sind und für ein lineares oder verzweigtes C₁-C₆-Alkyl stehen, M für Aluminium oder Zink steht und m für eine ganze Zahl von 1 bis 4 steht.

3. Kunststoffprodukte gemäß Anspruch 1 oder 2, **gekennzeichnet durch** einen nach DIN 5033 (1979) zu bestimmenden Farbabstand ΔE <20 von den L*a*b* Koordinaten zu einer mit "2" beginnenden Farbnummer der RAL-Farbtabelle gemäß Farbmodell nach EN ISO 11664-4..

4. Kunststoffprodukte gemäß einem oder mehreren der Ansprüche 1 bis 3 **dadurch gekennzeichnet, dass** auf 100 Massenanteile a) des wenigstens einen Polyamids
2 bis 100 Massenanteile, bevorzugt 5 bis 60 Massenanteile, besonders bevorzugt 7 bis 40 Massenanteile, insbesondere bevorzugt 8 bis 30 Massenanteile b) des wenigstens einen Flammschutzmittels,
0,2 bis 50 Massenanteile, bevorzugt 0,5 bis 40 Massenanteile, besonders bevorzugt 0,75 bis 35 Massenanteile c) des wenigstens einen Flammschutzmittel-Synergist und
0,01 bis 5 Massenanteile d) des wenigstens einen Farbmittels eingesetzt werden.

5. Kunststoffprodukte gemäß einem oder mehreren der Ansprüche 1 bis 4 **dadurch gekennzeichnet, dass** Komponente b) Phosphinsäuresalze Dialkylphosphinsäuresalze auszuwählen aus der Gruppe Aluminiummethylethylphosphinat Aluminiumtrisdiethylphosphinat, Aluminiumisopropylisobutylphosphinat, Aluminium-isopropyltertbutylphosphinat, Aluminiumdiisobutylphosphinat, Aluminiumtrismethylethylphosphinat, Zinkbisdiethylphosphinat, Zinkbismethylethylphosphinat und Mischungen davon sind.

6. Kunststoffprodukte gemäß einem oder mehreren der Ansprüche 1 bis 4 **dadurch gekennzeichnet, dass** als Komponente b) Aluminiumtrisdiethylphosphinat oder Zinkbisdiethylphosphinat eingesetzt werden.

7. Kunststoffprodukte gemäß einem oder mehreren der Ansprüche 1 bis 6 gekennzeichnet durcheinen Farbton der im RAL-Farbsystem der Farbnummer RAL2001, RAL2003, RAL2004, RAL2007, RAL2008, RAL2009, RAL2010 oder RAL2011.

8. Kunststoffprodukte gemäß einem oder mehreren der Ansprüche 1 bis 7 **dadurch gekennzeichnet, dass** diese noch e) wenigstens einen Füll und/oder Verstärkungsstoff, vorzugsweise zu 1 bis 150 Massenanteilen bezogen auf 100 Massenanteile Polyamid, enthalten.

9. Kunststoffprodukte gemäß Anspruch 8 **dadurch gekennzeichnet, dass** der Füll und/oder Verstärkungsstoff aus der Gruppe Kohlenstofffasern, Voll- oder Hohlglaskugeln, Glasfasern, gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum ausgewählt wird.

10. Kunststoffprodukte gemäß Anspruch 9 **dadurch gekennzeichnet, dass** als Füll und/oder Verstärkungsstoff Glasfasern mit einer mittels Laserbeugungs-Partikelgrößenanalyse gemäß ISO 13320 zu bestimmenden mittleren Ausgangslänge im Bereich von 1 bis 50 mm eingesetzt werden.

11. Kunststoffprodukte gemäß einem oder mehreren der Ansprüche 3 bis 10 **gekennzeichnet durch** Einsatz als lasertransparente, orange, flammgeschützte Erzeugnisse oder Fügepartner, insbesondere in der Elektromobilität.

12. Verfahren zur Herstellung von Kunststoffprodukten, vorzugsweise mit einem nach DIN 5033 (1979) zu bestimmenden Farbabstand ΔE <20 von den L*a*b* Koordinaten zu einer mit "2" beginnenden Farbnummer der RAL-Farbtabelle gemäß Farbmodell nach EN ISO 11664-4, indem man
a) wenigstens ein Polyamid,
b) wenigstens ein Flammschutzmittel aus wenigstens einem Phosphinsäuresalz der Formel (I) und/oder wenigstens einem Diphosphinsäuresalz der Formel (II) und/oder deren Polymere, 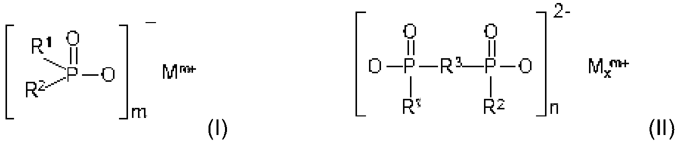 worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
M für Aluminium oder Zink steht,
m für eine ganze Zahl von 1 bis 4 steht;
n für eine ganze Zahl von 1 bis 3 steht,
x für 1 und 2 steht,
wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik oder Projektilinjektionstechnik, in Extrusionsverfahren, einschließlich in der Profil-Extrusion, oder durch Blasformen, weiter verarbeitet.

13. Verfahren gemäß Anspruch 12, **dadurch gekennzeichnet, dass** auf
A) 100 Massenanteile des wenigstens einen Polyamids, vorzugsweise Polyamid 6 oder Polyamid 66,
B) 2 bis 100 Massenanteile, bevorzugt 5 bis 60 Massenanteile, besonders bevorzugt 7 bis 40 Massenanteile, insbesondere bevorzugt 8 bis 30 Massenanteile des wenigstens einen Flammschutzmittels b),
C) 0,2 bis 50 Massenanteile, bevorzugt 0,5 bis 40 Massenanteile, besonders bevorzugt 0,75 bis 35 Massenanteile des wenigstens einen Flammschutzmittel-Synergist c) und
D) 0,01 bis 5 Massenanteile des wenigstens einen Farbmittels eingesetzt werden.

14. Verwendung des Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on zur Herstellung flammgeschützter Kunststoffprodukte wenn diese
a) wenigstens ein Polyamid,
b) wenigstens ein Flammschutzmittel aus wenigstens einem Phosphinsäuresalz der Formel (I) und/oder wenigstens einem Diphosphinsäuresalz der Formel (II) und/oder deren Polymere, 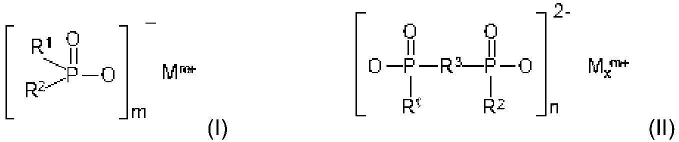 worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁ₒ-arylen oder C₆-C₁₀-Aryl-C₁-C₆-alkylen steht,
M für Aluminium oder Zink steht,
m für eine ganze Zahl von 1 bis 4 steht;
n für eine ganze Zahl von 1 bis 3 steht,
x für 1 und 2 steht,
wobei n, x und m in Formel (II) gleichzeitig nur solche ganzen Zahlen annehmen können, dass das Diphosphinsäuresalz der Formel (II) als Ganzes ungeladen ist, und
c) wenigstens einen Flammschutzmittel-Synergist auszuwählen aus Melaminpolyphosphat oder Aluminiumphosphonat enthalten.

15. Verwendung gemäß Anspruch 14, **dadurch gekennzeichnet, dass** auf 100 Massenanteile a) des wenigstens einen Polyamids
2 bis 100 Massenanteile, bevorzugt 5 bis 60 Massenanteile, besonders bevorzugt 7 bis 40 Massenanteile, insbesondere bevorzugt 8 bis 30 Massenanteile b) des wenigstens einen Flammschutzmittels,
0,2 bis 50 Massenanteile, bevorzugt 0,5 bis 40 Massenanteile, besonders bevorzugt 0,75 bis 35 Massenanteile c) des wenigstens einen Flammschutzmittel-Synergist
und 0,01 bis 5 Massenanteile des d) wenigstens einen Farbmittels eingesetzt werden.
